# EUROPEAN PATENT SPECIFICATION

(11) **EP 2 189 784 B1**
(45) Date of publication and mention of the grant of the patent: **13.05.2020**
(21) Application number: 09014377.7
(22) Date of filing: 17.11.2009
(51) Int. Cl.: G01N 21/84, C25C 7/06, B65G 61/00

(54) **Apparatus for inspecting surface of electrolytically refined metal deposited plate**
Vorrichtung zur Prüfung der Oberfläche einer Platte mit einer elektrolytisch raffinierten Metallablagerung
Appareil pour inspecter la surface d'une plaque métallique déposée et raffinée par électrolyse

(30) Priority: 21.11.2008 KR 20080116133
(43) Date of publication of application: 26.05.2010
(73) Proprietor: LS-Nikko Copper Inc., Ulju-gun, Ulsan 689-892 (KR)
(72) Inventor: Bae, Myeong-Rok, Ulju-gun Ulsan 689-892 (KR)
(74) Representative: Samson & Partner Patentanwälte mbB

(56) References cited:
- WO-A1-01/35083
- JP-A- 2009 167 532
- US-A1- 2007 144 894
- US-A1- 2007 152 616

## Description

The present invention relates to an apparatus for inspecting a surface of an electrolytically refined metal deposition plate, and more particularly, to an apparatus for inspecting a surface of an electrolytically refined metal deposition plate by capturing a surface image of the metal deposition plate and by automatically grading the metal deposition plate based on sizes of nodules and a distribution per unit surface area of the nodules in the captured surface image.

As is well known, a metal such as copper (Cu), zinc (Zn), nickel (Ni), and tellurium (Te) can be refined into a high purity metal by electrolysis. Electrolytic refinement is carried out by alternately submerging a plurality of anode and cathode plates in an electrolytic bath containing electrolytes and performing electrolysis. That is, the anode and cathode plates are submerged in the electrolytic bath in alternate fashion and an electric current is applied to the anode plate and the cathode plate. Then, metal ions such as copper ions (Cu²⁺) are separated from the anode plate submerged in the electrolyte and are deposited on the cathode plate to a preset thickness. The deposited metal is then separated from the cathode plate so that the refined metal may be obtained.

A solution containing electrolytic metal to be deposited is used as an electrolyte in the electrolytic refinement. Oxidation occurs at the surface of the anode plate where positive metal ions are produced and reduction occurs at the surface of the cathode plate where the positive metal ions are deposited. For example, in electrolytic refinement, 99% pure copper produced by smelting is cast as an anode plate and a stainless steel plate is used as a cathode plate. The copper ions separated from the anode plate are reduced at the cathode plate so that 99.993% or high purity copper is deposited to the cathode plate.

[Reaction formula]
Anode reaction:

Cu (99.5%) -> Cu²⁺ + 2e

Cathode reaction:

Cu²⁺ + 2e -> Cu (99.993%)

Full reaction:

Cu (99.5%) -> Cu (99.993%)

As described above, when a preset amount of metal is deposited to the cathode plate through the electrolytic refinement, it is examined whether the refined metal is normally deposited to the cathode plate. According to a conventional method of examining a plate deposited with metal refined by electrolysis, a worker examines sizes of and distribution per unit surface area of nodules that are caused by impurities contained in the deposited metal with the naked eye and grades the electrolytically refined metal deposition plate. In other words, the electrolytically refined metal deposition plate having large, widely distributed nodules is determined to be a low grade.

However, according to the conventional method, it is difficult to precisely determine the grade of the electrolytically refined metal due to degree of expertise and worker fatigue.

US 2007/152616 A1 discloses an apparatus for inspecting a surface of an electrolytically refined deposition plate.

WO 01/35083 A1 relates to a method for inspecting the surface quality of the deposit created on the surface of an electrode in an electrolytic treatment of metals.

US 2007/144894 A1 discloses a robot system for cathode stripping in electrometallurgical, wherein the cathode is moved to a stripping station, where the cathode stripping process from the base plate is carried out through successive operations of hammering, bending and separation.

Therefore, an object of the present invention is to provide an apparatus for inspecting a surface of an electrolytically refined metal deposition plate by capturing a surface of the plate and by automatically grading the metal deposition plate based on sizes of nodules and distribution per surface of the nodules in the captured surface.

While the invention is defined in the independent claim, further aspects of the invention are set forth in the dependent claims, the drawings and the following description.

The above and other aspects and features of the present invention will become apparent from the following description of preferred embodiments given in conjunction with the accompanying drawings, in which:
Fig. 1 is a perspective view illustrating an apparatus for inspecting an electrolytically refined metal deposition plate according to an embodiment of the present invention;
Fig. 2 is a front view of the inspecting apparatus of Fig. 1;
Fig. 3 is a perspective view illustrating an inspection unit of the inspection apparatus of Fig. 1;
Fig. 4 is a front view of the inspection unit of Fig. 3;
Fig. 5 is a perspective view illustrating a gripper unit of the inspection apparatus of Fig. 1;
Fig. 6 is a front view of the gripper unit of Fig. 5;
Fig. 7 is a side view of the gripper unit of Fig. 5; and
Figs. 8A to 8D are images of an electrolytically refined metal deposition plate captured by the inspection unit of Fig. 3.

Hereinafter, preferred embodiments of the present invention will be described in detail with reference to the accompanying drawings such that those skilled in the art may easily carry out the present invention. However, the present invention is not limited to the embodiments.

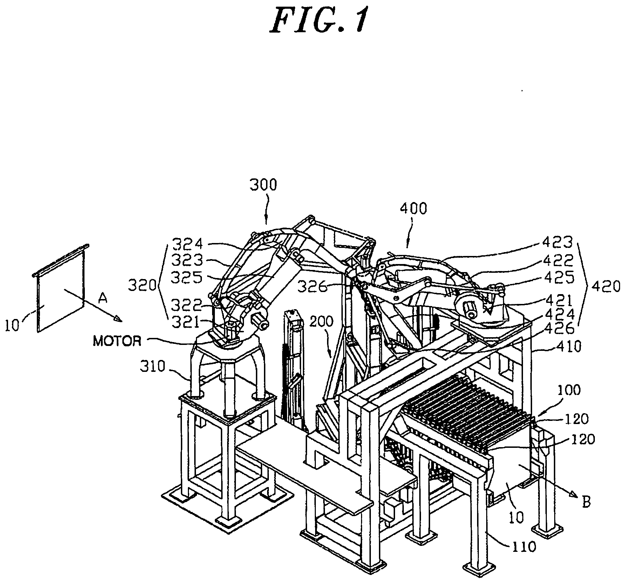

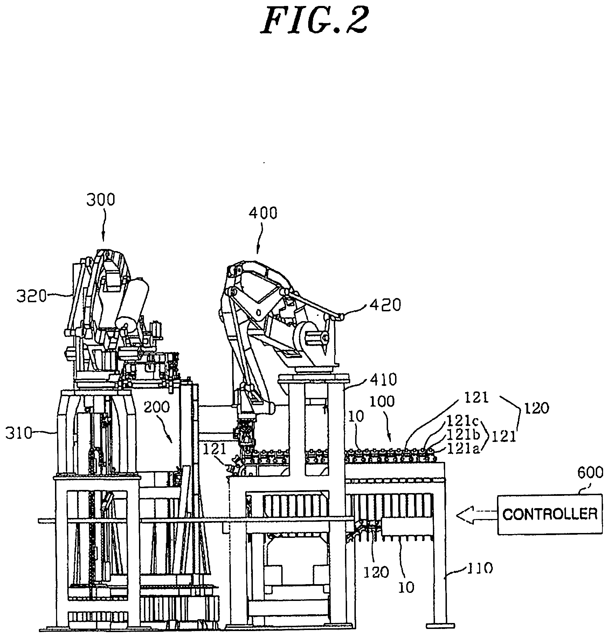

Fig. 1 is a perspective view illustrating an apparatus for inspecting an electrolytically refined metal deposition plate according to an embodiment of the present invention, and Fig. 2 is a front view of the inspection apparatus of Fig. 1.

As illustrated in Figs. 1 and 2, the apparatus for inspecting an electrolytically refined metal deposition plate according to an embodiment of the present invention includes a conveyor 100, an inspection unit 200, a loading robot 300, and an unloading robot 400.

The conveyor 100 withdraws a metal deposition plate 10, inspection of which has been completed and that is unloaded and discharged. An inspection unit 200 is installed at a side of the conveyor 100 to capture an image of a nodule generated on the metal deposition plate 10 and to provide the captured image to a controller 600.

The loading robot 300 is installed at the other side of the conveyor 100 to load the metal deposition plate 10 to the inspection unit 200. The unloading robot 400 is installed in an upper side of the conveyor 100 to unload the metal deposition plate 10, inspection of which has been completed by the inspection unit 200 to the conveyor 100.

The controller 600 performs overall control of the apparatus for inspecting an electrolytically refined metal deposition plate by controlling the conveyor 100, the inspection unit 200, the loading robot 300, and the unloading robot 400 respectively. The controller 600 receives the image obtained by capturing the metal deposition plate 100 in the inspection unit 200, and estimates the size of a nodule and nodule distribution per unit surface area of the metal deposition plate 10 using the captured image when the nodule is generated at the metal deposition plate 10 to automatically determine grade of the metal deposition plate 10 upon which inspection has been completed.

The conveyor 100, the inspection unit 200, the loading robot 300, and the unloading robot 400 of the apparatus for inspecting an electrolytically refined metal deposition plate will be described as follows.

The conveyor 100, as illustrated in Figs. 1 and 2, includes a conveyor base 110 and a pair of chain conveyor assemblies 120.

The conveyor base 110 supports the conveyor 100. The chain conveyor assemblies 120 are installed to the conveyor base 110 and include chains 121. Each of the chains 121 includes a plurality of links 121a and a plurality of seat members 121b having a seat groove 121c on which the metal deposition plate 10 is seated.

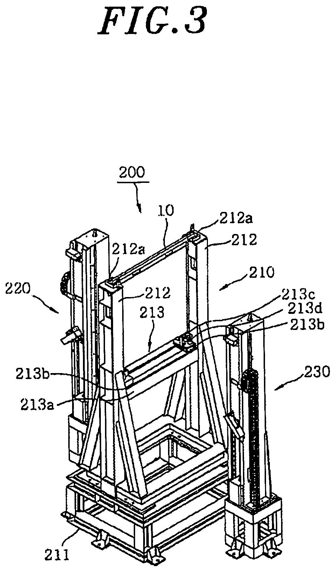

The inspection unit 200, as illustrated in Figs. 1, 3, and 4, includes an accommodating unit 210, a first vision unit 220, and a second vision unit 230.

The accommodating unit 210 accommodates the metal deposition plate 10 and includes an accommodator base 211, a pair of guide members 212, and a tension unit 213.

The accommodator base 211 supports the accommodating unit 210. The guide members 212 are installed on the accommodator base 211 and have guide grooves 212a guiding the metal deposition plate 10 to be accommodated in the accommodating unit 210. The tension unit 213 is installed between the guide members 212 to attenuate shock applied when the metal deposition plate is accommodated.

The tension unit 213 includes a support 213a, a pair of first tension bases 213b, a second tension base 213c, and a plurality of springs 213d.

The support 213a is installed between the guide members 212 and the first tension bases 213b are installed to both sides of the support 213a. The second tension 213c is installed on the first tension bases 213b. The springs 213d are installed between the first tension bases 213b and the second tension base 213c to absorb shock applied when the metal deposition plate 10 is lowered.

The first vision unit 220 is installed to one side of the accommodating unit 210 to capture a surface of the metal deposition plate 10 that is accommodated in the accommodating unit 210. The second vision unit 230 is installed to the opposite side of the accommodating unit 210 to capture the opposite surface of the metal deposition plate 10.

The first and second vision units 220 and 230 capturing the metal deposition plate 10 include elevation devices 221 and 231, elevation members 222 and 232, lighting devices 223 and 233, and cameras 224 and 234, respectively.

The elevation devices 221 and 231 may be devices employing ball screws. The elevation members 222 and 232 are elevated and lowered by the elevation devices 221 and 231. The lighting devices 223 and 233 are obliquely installed to the elevation members 222 and 232 by an angle to illuminate the metal deposition plate 10. The lighting devices 223 and 233 may include a laser and a light emitting diode (LED). If it is desired to get three-dimensional images, the lasers may be used. On the other hand, if it is required to get two-dimensional images, the LEDs may be used. The controller 600 controls selection of the lasers or the LEDs. Since this control is already well known, a detailed description thereof will be omitted.

The lighting devices 223 and 233 further include tilting units 225 and 235. The tilting units 225 and 235 include fixing blocks 225a and 235a, tilting members 225d and 235d, and pneumatic cylinders 225e and 235e.

The fixing blocks 225a and 235a are installed to the elevation members 222 and 232 and include a plurality of guide pins 225b and 235b. The tilting members 225d and 235d have a plurality of longitudinal holes 225c and 235c into which the guide pins 225b and 235b are inserted. The lighting devices 223 and 233 are installed to the tilting members 225d and 235d of the elevation members 222 and 232. The pneumatic cylinders 225e and 235e are connected to the fixing blocks 225a and 235a and the lighting devices 223 and 233. The pneumatic cylinders 225e and 235e push the lighting devices 223 and 233 to tilt the tilting members 225d and 235d by an angle so that an inclination of the lighting devices 223 and 233 is adjusted.

The cameras 224 and 234 are spaced apart from the lighting devices 223 and 233 so as to be perpendicular to the elevation members 222 and 232. The cameras 224 and 234 capture the metal deposition plate 10 to generate captured images of the metal deposition plate 10. The cameras 224 and 234 may be area cameras.

The loading robot 300, as illustrated in Figs. 1 and 2, includes a first robot base 310 and a first robot 320.

The first robot base 310 is installed at the opposite side of the conveyor unit 100. The first robot 320 loads the metal deposition plate 10 accommodated on the first robot base 310 to the inspection unit 200.

The first robot 320 includes a yoke 321 installed to the first robot base 310 to rotate by a motor, a swing member 322 connected to the yoke 321 to swing, a first arm 323 connected to the swing member 322 in cooperation with the swing member 322, a second arm 324 connected to the first arm 323 in cooperation with the first arm 323, a supporting member 325 connected to the yoke 321 and the second arm 324, and a gripper unit 326 rotatably installed to the second arm 324 to grip the metal deposition plate 10.

The unloading robot 400, as illustrated in Figs. 1 and 2, includes a second robot base 410 and a second robot 420.

The second robot base 410 is installed above the conveyor unit 100. The second robot 420 unloads the metal deposition plate 10, inspection of which has been completed by the inspection unit 200 and which is accommodated on the second robot base 410, to the conveyor unit 100.

The second robot 420, similar to the first robot 320 of the loading robot 300, includes a yoke 421, a swing member 422, a first arm 423, a second arm 424, a supporting member 425, and a gripper unit 426.

The yoke 521 is installed to the second robot base 410 to rotate by a motor. The swing member 422 is connected to the yoke 421 to swing. The first arm 423 is connected to the swing member 422 in cooperation with the swing member 422. The second arm 424 is connected to the first arm 423 in cooperation with the first arm 423. The supporting member 425 is connected to the yoke 421 and the second arm 424, and the gripper unit 426 rotatably installed to the second arm 424 to grip the metal deposition plate 10.

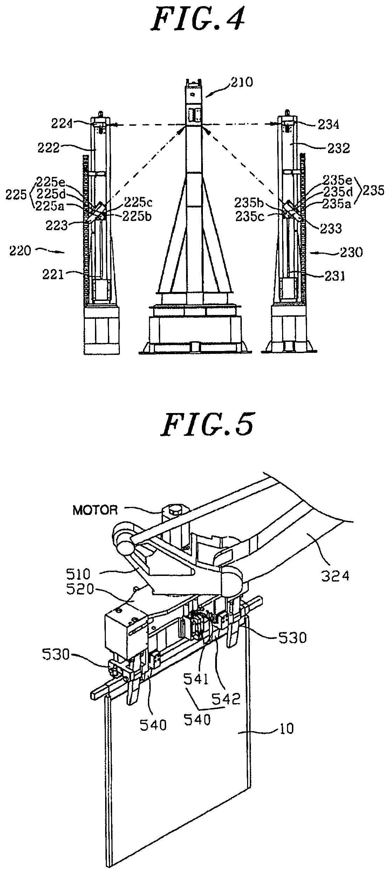

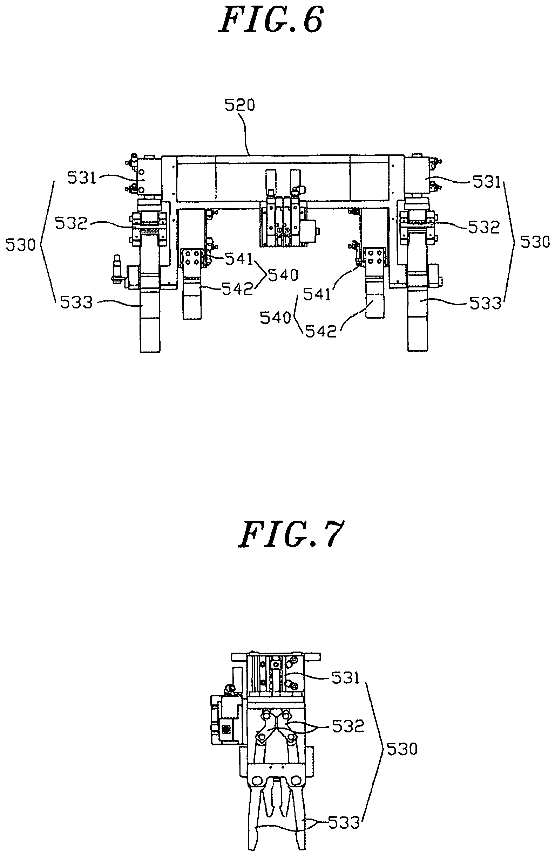

The gripper units 326 and 426 gripping the metal deposition plate 10 will be described with reference to Figs. 5 to 7 as follows.

Each of the gripper units 326 and 426 includes a pivoting member 510, a gripper frame 520, a pair of first grippers 530, and a pair of second grippers 540.

The pivoting members 510 are mounted to the second arms 324 and 424 to pivot. The gripper frames 520 are installed to the pivoting members 510. The first grippers 530 are installed to a side and an opposite side of the gripper frame 520 to grip the metal deposition plate 10. Each of the first grippers 530 includes a pneumatic cylinder 531, a pair of rotating members 532, and a pair of first gripping members 533.

The pneumatic cylinders 531 are installed to a side and an opposite side of the gripper frame 520. The rotating members 532 are installed to the gripper frame 520 to rotate the first gripping members 533 and are connected to the pneumatic cylinders 531, respectively. The first gripping members 533 are connected to the rotating members 532 to grip and release the metal deposition plate 10 due to the movement of the rotating members 532.

The second grippers 540 are installed inside the first gripper units 530 to the gripper frame 520 to grip the metal deposition plate 10. Each of the second grippers 540 includes a pneumatic cylinder 541 and a pair of second gripping members 542.

The pneumatic cylinders 541 are installed to a side and an opposite side of the gripper frame 520 to be inside the first gripper units 530. The second gripping members 542 are installed to the pneumatic cylinders 541 to grip and release the metal deposition plate 10.

The operation of the apparatus for inspecting a surface of an electrolytically refined metal deposition plate will be described as follows.

When the electrolytically refined metal deposition plate 10, e.g., having a size of 98 cm x 108 cm, is conveyed in the direction denoted by an arrow 'A' as shown in Fig. 1, the loading robot 300 grips the metal deposition plate 10 to load the plate 10 to the inspection unit 200. The inspection unit 200 captures the loaded metal deposition plate 10. In capturing the metal deposition plate 10, the first vision unit 220 captures one surface of the metal deposition plate 10 and the second vision unit 230 captures an opposite surface of the plate 10 to inspect whether nodules are generated on the surfaces of the metal deposition plate 10.

In order to inspect the surfaces of the metal deposition plate 10, the lighting devices 223 and 233 and the cameras 224 and 234 are installed to the elevation members 222 and 232, respectively. The elevation members 222 and 232 installed to the elevation devices 221 and 231 are elevated and lowered in the vertical direction. When the elevation members 222 and 232 are elevated and lowered in the vertical direction by the elevation devices 221 and 231, the lighting devices 223 and 233 and the cameras 224 and 234 scan and capture the surfaces of the metal deposition plate 10. The captured images of the metal deposition plate 10 are transmitted to the controller 600.

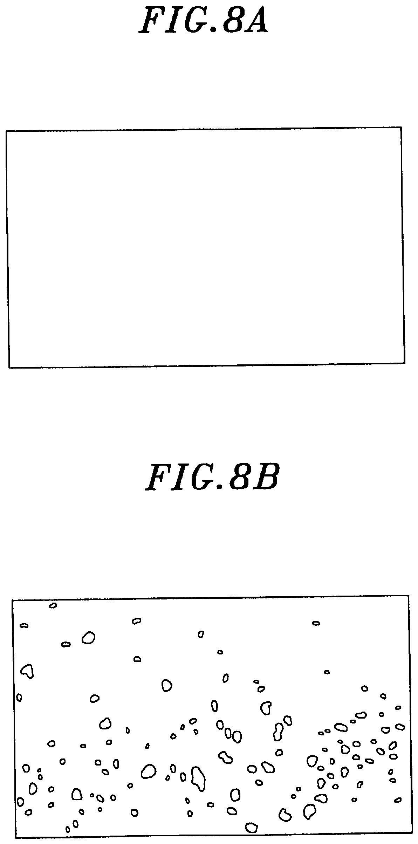

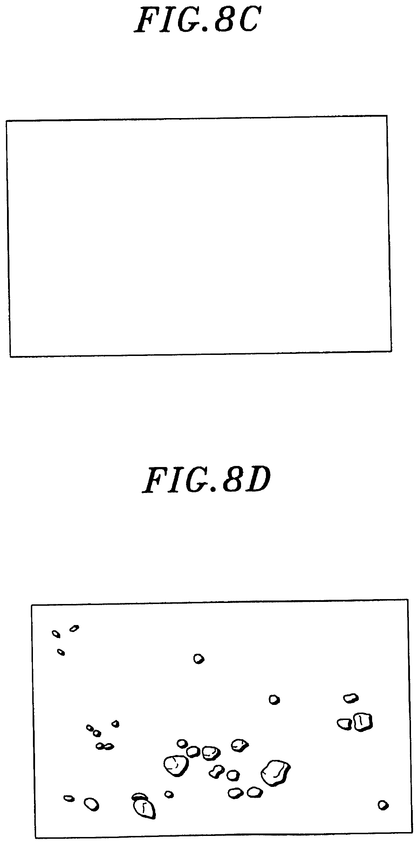

Fig. 8A shows a two-dimensional image of a surface of the metal deposition plate 10 without a nodule, whereas Fig. 8B shows a two-dimensional image of a surface of the plate 10 with nodules. Fig. 8C shows a three-dimensional image of a surface of the plate 10 without a nodule, whereas Fig. 8D shows a three-dimensional image of a surface of the plate 10 with nodules.

In a case where the images captured by the cameras 224 and 234 include nodules as shown in Figs. 8B and 8D, the controller 600 receives the captured images and determines the size and the number of the nodules to grade the metal deposition plate 10.

The metal deposition plate 10, which is captured and whose grade is determined by the controller 600, is transferred to the conveyor unit 100 by the unloading robot 400. In other words, the unloading robot 400 grips and unloads the metal deposition plate 10 accommodated in the inspection unit 200 to the conveyor unit 100. When the

plate 10 is unloaded, the conveyor unit 100 conveys the plate 10 in the direction denoted by an arrow 'B' such that the controller 600 grades the plate 10.

As described above, the metal deposition plate is automatically graded based on sizes of and distribution per unit surface area of nodules within the surface of the metal deposition plate, so that the electrolytically refined metal deposition plate may be graded at high speed and precisely. Moreover, it is easy to manage end product quality and to determine inferiority patterns of manufacturing apparatus.

While the invention has been shown and described with respect to the preferred embodiments, it will be understood by those skilled in the art that various changes and modifications may be made without departing from the scope of the invention as defined in the following claims.

## Claims

1. An apparatus for inspecting a surface of an electrolytically refined deposition plate, comprising:
an inspection unit (200) for inspecting a metal deposition plate (10);
a loading robot (300) for loading the metal deposition plate (10) to the inspection unit (200);
an unloading robot (400) for unloading the metal deposition plate (10) upon which inspection has been completed by the inspection unit (200);
a conveyor unit (100) for conveying the metal deposition plate (10) unloaded by the unloading robot (400); and
a controller (600), wherein
the inspection unit (200) is configured to capture the metal deposition plate (10) to generate a surface image of the metal deposition plate (10), and
the controller (600) is configured to estimate sizes of one or more of nodules and distribution per unit surface area of the one or more of nodules on the metal deposition plate (10) by using the surface image of the metal deposition plate (10), and to determine the grade of the metal deposition plate (10) based on the sizes of the one or more of nodules and the distribution per unit surface area of the one or more of nodules on the metal deposition plate (10),
wherein the inspection unit (200) comprises:
an accommodating unit (210) accommodating the metal deposition plate;
a first vision unit (220) installed at a side of the accommodating unit (210) to capture a surface of the metal deposition plate (10) accommodated in the accommodating unit (210); and
a second vision unit (230) installed to an opposite side of the accommodating unit (210) to capture an opposite surface of the metal deposition plate (10) accommodated in the accommodating unit (210),
wherein each surface image of the metal deposition plate (10) is provided to the controller (600) for determining the grade of the metal deposition plate (10), and
wherein the accommodating unit (210) comprises:
an accommodator base (211);
a pair of guide members (212) installed to the accommodator base (211) and having guide grooves (212a) to guide the metal deposition plate (10) to be accommodated; and
a tension unit (213) installed between the guide members (212) to attenuate shock applied when the metal deposition plate (10) is accommodated, wherein the tension unit (213) comprises:
a support (213a) installed between the guide members (212);
first tension bases (213b) installed to sides of the support (213a);
a second tension base (213c) installed on the first tension bases (213b); and
springs (213d) installed between the first tension bases (213b) and the second tension base (213c) to absorb shock applied when the metal deposition plate (10) is lowered.

2. The apparatus of claim 1, wherein the conveyor unit (100) comprises:
a conveyor base (110); and
a pair of chain conveyor assemblies (120) installed to the conveyor base (110) and including chains (121), wherein each of the chains (121) includes links (121a) and seat members (121b) having seat grooves (121c) on which the metal deposition plate (10) is seated.

3. The apparatus of claim 1, wherein each of the first vision unit (220) and the second vision unit (230) comprises:
an elevation device (221 and 231);
an elevation member (222 and 232) installed to the elevation device (221 and 231) to be elevated and lowered;
a lighting device (223 and 233) installed to the elevation member (222 and 232) by an angle to illuminate the metal deposition plate (10); and
a camera (224 and 234) spaced apart from the lighting device (223 and 233) to be perpendicular to the elevation member (222 and 232) to capture the metal deposition plate (10).

4. The apparatus of claim 3, wherein the elevation device (221 and 231) includes a device employing a ball screw.

5. The apparatus of claim 3, wherein the lighting device (223 and 233) comprises a tilting unit (225 and 235), wherein the tilting unit (225 and 235) includes:
a fixing block (225a and 235a) installed to the elevation member (222 and 232) and having a plurality of guide pins (225b and 235b);
a tilting member (225d and 235d) having a plurality of longitudinal hole (225c and 235c) into which the guide pins (225b and 235b) are inserted and to which the lighting device (223 and 233) is installed; and
a pneumatic cylinder (225e and 235e) connected to the fixing block (225a and 235a) and the lighting device (223 and 233) to push the lighting device (223 and 233) such that the tilting member (225d and 235d) is tilted to adjust an inclination of the lighting device (223 and 233).

6. The apparatus of claim 1, wherein the loading robot (300) comprises:
a first robot base (310); and
a robot (320) for loading the metal deposition plate (10) accumulated on the first robot base (310) to the inspection unit (200);
wherein the robot (320) comprises:
a yoke (321) rotatably installed to the first robot base (310);
a swing member (322) connected to the yoke (321) to swing;
a first arm (323) associated with the swing member (322);
a second arm (324) associated with the first arm (323);
a supporting member (325) connected to the yoke (321) and the second arm (324); and
a gripper unit (326) rotatably installed to the second arm (324) to grip the metal deposition plate (10).

7. The apparatus of claim 1, wherein the unloading robot (400) comprises:
a second robot base (410); and
a robot (420) unloading the metal deposition plate (10) upon which the inspection has been completed by the inspection unit (200) and which are accumulated on the second robot base (410) to the inspection unit (200);
wherein the robot (420) comprises:
a yoke (421) rotatably installed to the second robot base (410);
a swing member (422) connected to the yoke (421) to swing;
a first arm (423) associated with the swing member (422);
a second arm (424) associated with the first arm (423);
a supporting member (425) connected to the yoke (421) and the second arm (424); and
a gripper unit (426) rotatably installed to the second arm (424) to grip the metal deposition plate (10).

8. The apparatus of claim 6 or 7, wherein each of the gripper units (326 and 426) comprises:
a pivoting member (510) pivotally mounted to the second arm (324 and 424);
a gripper frame (520) installed to the pivoting member (510);
a pair of first grippers (530) installed to a side and an opposite side of the gripper frame (520) to grip the metal deposition plate (10); and
a pair of second grippers (540) installed to the gripper frame (520) inside the first grippers (530) to grip the metal deposition plate (10);
wherein the first grippers (530) include:
pneumatic cylinders (531) installed to a side and an opposite side of the gripper frame (520);
a pair of rotating members (532) rotatably installed to the gripper frame (520) and connected to the pneumatic cylinders (531); and
a pair of first gripping members (533) connected to the rotating members (532) to grip and release the metal deposition plate (10) due to the movement of the rotating members (532),
wherein the second grippers (540) includes:
a pair of pneumatic cylinders (541) installed to a side and an opposite side of the gripper frame (520) to be inside the first gripper units (530); and
a pair of second gripping members (542) installed to the pneumatic cylinders (541) to grip and release the metal deposition plate (10).

## Patentansprüche

1. Vorrichtung zur Prüfung der Oberfläche einer Platte mit einer elektrolytisch raffinierten Metallablagerung, umfassend:
eine Inspektionseinheit (200) zur Inspektion einer Metallablagerungsplatte (10);
einen Beladungsroboter (300) zum Laden der Metallablagerungsplatte (10) in die Inspektionseinheit (200);
einen Entladungsroboter (400) zum Entladen der Metallablagerungsplatte (10), nachdem die Inspektion durch die Inspektionseinheit (200) abgeschlossen wurde;
eine Fördereinheit (100) zum Fördern der vom Entladeroboter (400) entladenen Metallablagerungsplatte (10); und
eine Steuerung (600), wobei
die Inspektionseinheit (200) ausgestaltet ist, um die Metallablagerungsplatte (10) zu erfassen, um ein Oberflächenbild der Metallablagerungsplatte (10) zu erzeugen, und
die Steuerung (600) ausgestaltet ist, um die Größen eines oder mehrerer Klümpchen und die Verteilung pro Oberflächeneinheit des einen oder der mehreren Klümpchen auf der Metallablagerungsplatte (10) unter Verwendung des Oberflächenbildes der Metallablagerungsplatte (10) zu schätzen und um die Klasse der Metallablagerungsplatte (10) auf der Grundlage der Größen des einen oder der mehreren Klümpchen und der Verteilung pro Oberflächeneinheit des einen oder der mehreren Klümpchen auf der Metallablagerungsplatte (10) zu bestimmen,
wobei die Inspektionseinheit (200) umfasst:
eine Aufnahmeeinheit (210), zum Aufnehmen der Metallablagerungsplatte;
eine erste Betrachtungseinheit (220), die an einer Seite der Aufnahmeeinheit (210) installiert ist, um eine Oberfläche der in der Aufnahmeeinheit (210) untergebrachten Metallablagerungsplatte (10) zu erfassen; und
eine zweite Betrachtungseinheit (230), die an einer gegenüberliegenden Seite der Aufnahmeeinheit (210) installiert ist, um eine gegenüberliegende Oberfläche der in der Aufnahmeeinheit (210) untergebrachten Metallablagerungsplatte (10) zu erfassen,
wobei jedes Oberflächenbild der Metallablagerungsplatte (10) der Steuerung (600) zur Bestimmung der Klasse der Metallablagerungsplatte (10) zugeführt wird, und wobei die Aufnahmeeinheit (210) umfasst:
eine Aufnahmebasis (211);
ein Paar von Führungselementen (212), die an der Aufnahmebasis (211) installiert sind und Führungsnuten (212a) zum Führen der aufzunehmenden Metallablagerungsplatte (10) aufweisen; und
eine Spannungseinheit (213), die zwischen den Führungselementen (212) installiert ist, um den bei der Aufnahme der Metallablagerungsplatte (10) ausgeübten Stoß zu dämpfen, wobei die Spannungseinheit (213) umfasst:
eine Stütze (213a), die zwischen den Führungselementen (212) installiert ist;
erste Spannungsbasen (213b), die seitlich der Stütze (213a) installiert sind;
eine zweite Spannungsbasis (213c), die auf den ersten Spannungsbasen (213b) installiert ist; und
Federn (213d), die zwischen den ersten Spannungsbasen (213b) und der zweiten Spannungsbasis (213c) installiert sind, um Stöße zu absorbieren, die beim Absenken der Metallablagerungsplatte (10) auftreten.

2. Vorrichtung nach Anspruch 1, wobei die Fördereinheit (100) umfasst:
eine Fördererbasis (110); und
ein Paar von Kettenfördereranordnungen (120), die an der Fördererbasis (110) installiert sind und Ketten (121) enthalten, wobei jede der Ketten (121) Glieder (121a) und Sitzelemente (121b) mit Sitznuten (121c) aufweist, auf denen die Metallablagerungsplatte (10) sitzt.

3. Vorrichtung nach Anspruch 1, bei der sowohl die erste Betrachtungseinheit (220) als auch die zweite Betrachtungseinheit (230) umfasst:
eine Hebevorrichtung (221 und 231);
ein an der Hebevorrichtung (221 und 231) installiertes Hebeelement (222 und 232), das gehoben und gesenkt werden soll;
eine Beleuchtungsvorrichtung (223 und 233), die an dem Hebeelement (222 und 232) in einem Winkel installiert ist, um die Metallablagerungsplatte (10) zu beleuchten; und
eine Kamera (224 und 234), die von der Beleuchtungsvorrichtung (223 und 233) beabstandet ist, um senkrecht zu dem Hebeelement (222 und 232) zu sein, um die Metallablagerungsplatte (10) zu erfassen.

4. Vorrichtung nach Anspruch 3, wobei die Hebevorrichtung (221 und 231) eine Vorrichtung mit einem Kugelgewinde enthält.

5. Vorrichtung nach Anspruch 3, wobei die Beleuchtungseinrichtung (223 und 233) eine Kippeinheit (225 und 235) umfasst, wobei die Kippeinheit (225 und 235) enthält:
einen Befestigungsblock (225a und 235a), der an dem Erhebungselement (222 und 232) installiert ist und eine Vielzahl von Führungsstiften (225b und 235b) aufweist;
ein Kippelement (225d und 235d) mit einer Vielzahl von Längslöchern (225c und 235c), in die die Führungsstifte (225b und 235b) eingeführt sind und an denen die Beleuchtungsvorrichtung (223 und 233) installiert ist; und
einen pneumatischen Zylinder (225e und 235e), der mit dem Befestigungsblock (225a und 235a) und der Beleuchtungsvorrichtung (223 und 233) verbunden ist, um die Beleuchtungsvorrichtung (223 und 233) so zu drücken, dass das Kippelement (225d und 235d) gekippt wird, um eine Neigung der Beleuchtungsvorrichtung (223 und 233) einzustellen.

6. Vorrichtung nach Anspruch 1, wobei der Beladungsroboter (300) umfasst:
eine erste Roboterbasis (310); und
einen Roboter (320) zum Laden der auf der ersten Roboterbasis (310) angesammelten Metallabscheidungsplatte (10) in die Inspektionseinheit (200);
wobei der Roboter (320) umfasst:
ein Joch (321), das drehbar an der ersten Roboterbasis (310) installiert ist;
ein Schwenkelement (322), das mit dem Joch (321) zum Schwenken verbunden ist;
ein erster Arm (323), der mit dem Schwenkelement (322) verbunden ist;
ein zweiter Arm (324), der mit dem ersten Arm (323) verbunden ist;
ein Stützelement (325), das mit dem Joch (321) und dem zweiten Arm (324) verbunden ist; und
eine Greifeinheit (326), die drehbar am zweiten Arm (324) installiert ist, um die Metallablagerungsplatte (10) zu greifen.

7. Vorrichtung nach Anspruch 1, wobei der Entladungsroboter (400) umfasst:
eine zweite Roboterbasis (410); und
einen Roboter (420), der die Metallablagerungsplatte (10), auf der die Inspektion durch die Inspektionseinheit (200) abgeschlossen wurde und die auf der zweiten Roboterbasis (410) gesammelt sind, auf die Inspektionseinheit (200) lädt;
wobei der Roboter (420) umfasst:
ein Joch (421), das drehbar an der zweiten Roboterbasis (410) installiert ist;
ein Schwenkelement (422), das mit dem Joch (421) zum Schwenken verbunden ist;
ein erster Arm (423), der mit dem Schwenkelement (422) verbunden ist;
ein zweiter Arm (424), der mit dem ersten Arm (423) verbunden ist;
ein Stützelement (425), das mit dem Joch (421) und dem zweiten Arm (424) verbunden ist; und
eine Greifereinheit (426), die drehbar am zweiten Arm (424) installiert ist, um die Metallablagerungsplatte (10) zu greifen.

8. Vorrichtung nach Anspruch 6 oder 7, wobei jede der Greifereinheiten (326 und 426) umfasst:
ein schwenkbares Element (510), das schwenkbar am zweiten Arm (324 und 424) angebracht ist;
einen Greiferrahmen (520), der an dem schwenkbaren Element (510) installiert ist;
ein Paar von ersten Greifern (530), die an einer Seite und einer gegenüberliegenden Seite des Greiferrahmens (520) installiert sind, um die Metallablagerungsplatte (10) zu greifen; und
ein Paar von zweiten Greifern (540), die an dem Greiferrahmen (520) innerhalb der ersten Greifer (530) installiert sind, um die Metallablagerungsplatte (10) zu greifen;
wobei die ersten Greifer (530) enthalten:
pneumatische Zylinder (531), die an einer Seite und an einer gegenüberliegenden Seite des Greiferrahmens (520) installiert sind;
ein Paar von rotierenden Elementen (532), die drehbar an dem Greiferrahmen (520) installiert und mit den pneumatischen Zylindern (531) verbunden sind; und
ein Paar von ersten Greifelementen (533), die mit den Drehelementen (532) verbunden sind, um die Metallablagerungsplatte (10) aufgrund der Bewegung der Drehelemente (532) zu greifen und freizugeben,
wobei der zweite Greifer (540) enthält:
ein Paar von pneumatischen Zylindern (541), die an einer Seite und einer gegenüberliegenden Seite des Greiferrahmens (520) installiert sind, um sich innerhalb der ersten Greifereinheiten (530) zu befinden; und
ein Paar von zweiten Greifelementen (542), die an den pneumatischen Zylindern (541) installiert sind, um die Metallablagerungsplatte (10) zu greifen und freizugeben.

## Revendications

1. Appareil pour inspecter une surface d'une plaque de déposition raffinée par voie électrolytique, comprenant :
une unité d'inspection (200) pour inspecter une plaque de déposition métallique (10) ;
un robot de chargement (300) pour charger la plaque de déposition métallique (10) sur l'unité d'inspection (200) ;
un robot de déchargement (400) pour décharger la plaque de déposition métallique (10) sur laquelle l'inspection a été réalisée par l'unité d'inspection (200) ;
une unité de transporteur (100) pour transporter la plaque de déposition métallique (10) déchargée par le robot de déchargement (400) ; et
un organe de commande (600), dans lequel :
l'unité d'inspection (200) est configurée pour capturer la plaque de déposition métallique (10) afin de générer une image de surface de la plaque de déposition métallique (10), et
l'organe de commande (600) est configuré pour estimer les tailles d'un ou de plusieurs nodules et la distribution par unité de surface des un ou plusieurs nodules sur la plaque de déposition métallique (10) en utilisant l'image de surface de la plaque de déposition métallique (10), et pour déterminer la qualité de la plaque de déposition métallique (10) sur la base des tailles des un ou plusieurs nodules et la distribution par unité de surface des un ou plusieurs nodules sur la plaque de déposition métallique (10),
dans lequel l'unité d'inspection (200) comprend :
une unité de logement (210) logeant la plaque de déposition métallique ;
une première unité de vision (220) installée au niveau d'un côté de l'unité de logement (210) pour capturer une surface de la plaque de déposition métallique (10) logée dans l'unité de logement (210) ; et
une seconde unité de vision (230) installée sur un côté opposé de l'unité de logement (210) pour capturer une surface opposée de la plaque de déposition métallique (10) logée dans l'unité de logement (210),
dans lequel chaque image de surface de la plaque de déposition métallique (10) est prévue sur l'organe de commande (600) pour déterminer la qualité de la plaque de déposition métallique (10), et
dans lequel l'unité de logement (210) comprend :
une base de dispositif de logement (211) ;
une paire d'éléments de guidage (212) installée sur la base de dispositif de logement (211) et ayant des rainures de guidage (212a) pour guider la plaque de déposition métallique (10) pour qu'elle soit logée ; et
une unité de tension (213) installée entre les éléments de guidage (212) pour atténuer le choc appliqué lorsque le plaque de déposition métallique (10) est logée, dans lequel l'unité de tension (213) comprend :
un support (213a) installé entre les éléments de guidage (212) ;
les premières bases de tension (213b) installées sur les côtés du support (213a) ;
une seconde base de tension (213c) installée sur les premières bases de tension (213b) ; et
des ressorts (213d) installés entre les premières bases de tension (213b) et la seconde base de tension (213c) pour absorber le choc appliqué lorsque la plaque de déposition métallique (10) est abaissée.

2. Appareil selon la revendication 1, dans lequel l'unité de transporteur (100) comprend :
une base de transporteur (110) ; et
une paire d'ensembles de transporteur à chaîne (120) installée sur la base de transporteur (110) et comprenant des chaînes (121), dans lequel chacune des chaînes (121) comprend des maillons (121a) et des éléments de siège (121b) ayant des rainures de siège (121c) sur lesquelles la plaque de déposition métallique (10) est installée.

3. Appareil selon la revendication 1, dans lequel chacune parmi la première unité de vision (220) et la seconde unité de vision (230) comprend :
un dispositif d'élévation (221 et 231) ;
un élément d'élévation (222 et 232) installé sur le dispositif d'élévation (221 et 231) pour être levé et abaissé ;
un dispositif d'éclairage (223 et 233) installé sur l'élément d'élévation (222 et 232) selon un angle pour éclairer la plaque de déposition métallique (10) ; et
une caméra (224 et 234) espacée du dispositif d'éclairage (223 et 233) pour être perpendiculaire à l'élément d'élévation (222 et 232) afin de capturer la plaque de déposition métallique (10).

4. Appareil selon la revendication 3, dans lequel le dispositif d'élévation (221 et 231) comprend un dispositif utilisant une vis sphérique.

5. Appareil selon la revendication 3, dans lequel le dispositif d'éclairage (223 et 233) comprend une unité d'inclinaison (225 et 235), dans lequel l'unité d'inclinaison (225 et 235) comprend :
un bloc de fixation (225a et 235a) installé sur l'élément d'élévation (222 et 232) et ayant une pluralité de broches de guidage (225b et 235b) ;
un élément d'inclinaison (225d et 235d) ayant une pluralité de trous longitudinaux (225c et 235c) dans lesquels les broches de guidage (225b et 235b) sont insérées et sur lesquels le dispositif d'éclairage (223 et 233) est installé ; et
un cylindre pneumatique (225e et 235e) raccordé au bloc de fixation (225a et 235a) et au dispositif d'éclairage (223 et 233) pour pousser le dispositif d'éclairage (223 et 233) de sorte que l'élément d'inclinaison (225d et 235d) est incliné afin d'ajuster une inclinaison du dispositif d'éclairage (223 et 233).

6. Appareil selon la revendication 1, dans lequel le robot de chargement (300) comprend :
une première base de robot (310) ; et
un robot (320) pour charger la plaque de déposition métallique (10) accumulée sur la première base de robot (310), sur l'unité d'inspection (200) ;
dans lequel le robot (320) comprend :
une culasse (321) installée en rotation sur la première base de robot (310) ;
un élément oscillant (322) raccordé à la culasse (321) pour osciller ;
un premier bras (323) associé à l'élément oscillant (322) ;
un second bras (324) associé au premier bras (323) ;
un élément de support (325) raccordé à la culasse (321) et au second bras (324) ; et
une unité de préhension (326) installée en rotation sur le second bras (324) pour saisir la plaque de déposition métallique (10).

7. Appareil selon la revendication 1, dans lequel le robot de déchargement (400) comprend :
une seconde base de robot (410) ; et
un robot (420) déchargeant la plaque de déposition métallique (10) sur laquelle l'inspection a été terminée par l'unité d'inspection (200) et qui sont accumulés sur la seconde base de robot (410) dans l'unité d'inspection (200) ;
dans lequel le robot (420) comprend :
une culasse (421) installée en rotation sur la seconde base de robot (410) ;
un élément oscillant (422) raccordé à la culasse (421) pour osciller ;
un premier bras (423) associé à l'élément oscillant (422) ;
un second bras (424) associé avec le premier bras (423) ;
un élément de support (425) raccordé à la culasse (421) et au second bras (424) ; et
une unité de préhension (426) installée en rotation sur le second bras (424) pour saisir la plaque de déposition métallique (10).

8. Appareil selon la revendication 6 ou 7, dans lequel chacune des unités de préhension (326 et 426) comprend :
un élément pivotant (510) monté de manière pivotante sur le second bras (324 et 424) ;
un bâti de dispositif de préhension (520) installé sur l'élément pivotant (510) ;
une paire de premiers dispositifs de préhension (530) installée sur un côté et un côté opposé du bâti de dispositif de préhension (520) pour saisir la plaque de déposition métallique (10) ; et
une paire de seconds dispositifs de préhension (540) installée sur le bâti d'élément de préhension (520) à l'intérieur des premiers dispositifs de préhension (530) pour saisir la plaque de déposition métallique (10) ;
dans lequel les premiers dispositifs de préhension (530) comprennent :
des cylindres pneumatiques (531) installés sur un côté et un côté opposé du bâti de dispositif de préhension (520) ;
une paire d'éléments rotatifs (532) installée en rotation sur le bâti de dispositif de préhension (520) et raccordée aux cylindres pneumatiques (531) ; et
une paire de premiers éléments de préhension (533) raccordée aux éléments rotatifs (532) pour saisir et libérer la plaque de déposition métallique (10) en raison du mouvement des éléments rotatifs (532),
dans lequel les seconds dispositifs de préhension (540) comprennent :
une paire de cylindres pneumatiques (541) installée sur un côté et un côté opposé du bâti d'élément de préhension (520) pour être à l'intérieur des premières unités de dispositif de préhension (530) ; et
une paire de seconds éléments de préhension (542) installée sur les cylindres pneumatiques (541) pour saisir et libérer la plaque de déposition métallique (10).
